# EUROPÄISCHE PATENTSCHRIFT

(11) **EP 1 751 462 B1**
(45) Veröffentlichungstag und Bekanntmachung des Hinweises auf die Patenterteilung: **26.09.2012**
(21) Anmeldenummer: 05743118.1
(22) Anmeldetag: 11.05.2005
(51) Int. Cl.: F16L 47/10

(54) **LÖSBARE LADELUFT-KUPPLUNGSMUFFE**
REMOVABLE CHARGE AIR COUPLING SLEEVE
MANCHON D'ACCOUPLEMENT AMOVIBLE POUR AIR DE SURALIMENTATION

(30) Priorität: 19.05.2004 DE 102004024716
(43) Veröffentlichungstag der Anmeldung: 14.02.2007
(73) Patentinhaber: ContiTech Schlauch GmbH, 30165 Hannover (DE)
(72) Erfinder: HABERJAN, Horst, 37186 Moringen (DE); BORNEMANN, Axel, 37191 Katlenb.-Lindau (DE)
(74) Vertreter: Finger, Karsten
(86) Internationale Anmeldenummer: PCT/EP2005/052137
(87) Internationale Veröffentlichungsnummer: WO 2005/114034

(56) Entgegenhaltungen:
- EP-A- 0 026 536
- EP-A- 1 046 855
- EP-A- 1 069 364

## Beschreibung

Die Erfindung betrifft eine lösbare Ladeluft - Kupplungsmuffe aus Kunststoff zur Verbindung eines medienführenden Schlauches mit einem aggregateseitigen Anschlussstutzen, die folgende Merkmale aufweist:
- einen Abschnitt für den Schlauchanschluss mit
   ■ einem abgewinkelten oder geraden Anschlussrohr,
- einen Abschnitt zum Aufstecken auf den Anschlussstutzen mit
   ■ einer Verdrehsicherung zum Verhindern der Verdrehung zwischen der Kupplungsmuffe und dem Anschlussstutzen,
   ■ einer Dichtung zur Abdichtung der Ladeluft - Kupplungsmuffe gegen den Anschlussstutzen,
   ■ einem die Dichtung fixierenden Sperrring und
   ■ einer Haltefeder zum Festhalten der Kupplungsmuffe auf dem Anschlussstutzen.

Derartige Ladeluft - Kupplungsmuffen sind im Automobilbau bereits bekannt. Sie weisen meist vereinheitlichte, drehfeste Anschlussstutzen auf, die beispielsweise an einem Motorblock oder einem Ladeluftkühler eines Kraftfahrzeugs angebracht sind. Auf diese Anschlussstutzen sind die ebenfalls standardisierten Ladeluft - Kupplungsmuffen aufsteckbar, wobei die Ladeluft - Kupplungsmuffen durch die in entsprechende Nuten der Anschlussstutzen einrastenden Haltefedern auf den Anschlussstutzen festgehalten werden. An den Ladeluft - Kupplungsmuffen ist der jeweilige Schlauch befestigt, wobei das Anschlussrohr für den Schlauch in unterschiedlichen Winkelstellungen zur Muffenachse angeordnet sein kann.

Zur sicheren und dauerhaften Abdichtung zwischen Anschlussstutzen und Ladeluft - Kupplungsmuffe ist es erforderlich, die Verdrehung zwischen Anschlussstutzen und Ladeluft - Kupplungsmuffe zu verhindern. Dazu dient im allgemeinen eine Verdrehsicherung, die meist an den aggregateseitigen Anschlussstutzen angebracht ist und in eine entsprechende Ausnehmung in der Ladeluft - Kupplungsmuffe eingreift. Die Verdrehsicherung ist jedoch aufgrund der meist in Kraftfahrzeugen vorherrschenden Enge der Einbauräume nicht beliebig platzierbar. Daher ist es erforderlich, Ladeluft - Kupplungsmuffen mit einer gegenüber der Lage der Verdrehsicherung für jeden Anwendungsfall angepassten axialen und radialen Winkellage des Anschlussrohres einzusetzen.

Üblicherweise werden derartige Ladeluft - Kupplungsmuffen aus Kunststoff im Spritzgussverfahren hergestellt. Dabei ist für jede Form der Ladeluft - Kupplungsmuffe ein eigenes Spritzgusswerkzeug erforderlich. An die Halbfertigteile werden anschließend in gesonderten Arbeitsgängen die Dichtungen, die Sperringe und die Haltefedern montiert. Als Dichtungen werden meist O-Ringe eingesetzt. Die Sperrringe dienen dazu, die Dichtungen sicher in den Ladeluft - Kupplungsmuffen festzuhalten.

In der EP 1 069 364 B1 ist eine gattungsgemäße Ladeluft-Kupplungsmuffe offenbart, bei der die Dichtung als O-Ring-Dichtung ausgebildet ist, die keine Unterscheidung zwischen statischer und dynamischer Dichtfunktion bietet. Die O-Ring-Dichtung ist durch zwei Teilabschnitte eines Aufnahmeteils in einer Nut gehalten. Die Nut muss bei einer O-Ring-Dichtung so ausgebildet sein, dass das Elastomermaterial der Dichtung bei Verformung der O-Ring-Dichtung in der Nut Platz findet. Nur so ist es möglich, ein gegen die Kupplungsmuffe zu dichtendes Teil in die Kupplungsmuffe einzuschieben, ohne die Dichtung abzuscheren.

In der EP 0 026 536 B1 ist eine Lippendichtung offenbart, die einen Dichtabschnitt und einen Halteabschnitt aufweist. Der Halteabschnitt ist mittels eines elastischen Halterings in einer Nut gehalten, wobei der Haltering über einen Ringvorsprung in die Muffe einclipsbar ist.

Da der Haltering elastisch ist, ist eine sichere statische Dichtfunktion zwischen der Kupplungsmuffe und dem Halteabschnitt der Dichtung nicht sicher. Die Dichtheit zwischen der Kupplungsmuffe und einem eingeschobenen Rohr ist mit dieser Konstruktion nur dadurch erreichbar, dass der Dichtabschnitt der Dichtung sowohl an der Wandung der Kupplungsmuffe als auch an der Wandung des Rohres anliegt. Zur Verbesserung der Dichtheit sind dazu beidseitig des Dichtungsabschnitts zusätzlich Dichtlippen notwendig.

Die geschilderten Ladeluft - Kupplungsmuffen haben den Nachteil, dass durch die Verwendung von O-Ring-Dichtungen bei der Montage der Ladeluft - Kupplungsmuffen auf die Anschlussstutzen hohe Fügekräfte notwendig sind. Außerdem wird bei gegebener Abwinkelung des Anschlussrohres für jede radiale Winkelstellung zwischen Verdrehsicherung und abgewinkeltem Anschlussrohr zur Herstellung ein eigenes Spritzgusswerkzeug benötigt und Dichtung, Sperrring und Haltefeder müssen in separaten Arbeitsgängen montiert werden.

Der Erfindung liegt die Aufgabe zugrunde, eine Ladeluft - Kupplungsmuffe der eingangs beschriebenen Art zu schaffen, die eine Montage mit niedrigen Fügekräften auch in engen Einbauverhältnissen ermöglicht und mit vermindertem Werkzeug- und Montageaufwand herstellbar ist.

Diese Aufgabe wird dadurch gelöst, dass die Dichtung der Ladeluft - Kupplungsmuffe als asymmetrischer Formdichtring mit einem statisch dichtenden, ringförmigen Tragkörper und einer dynamisch dichtenden konischen Ringdichtlippe ausgebildet ist, wobei
- der ringförmige Tragkörper der Öffnung der Ladeluft - Kupplungsmuffe zugewandt ist, die auf den aggregateseitigen Anschlussstutzen aufsteckbar ist und durch den Sperrring axial gegen die Ladeluft - Kupplungsmuffe verpresst ist und
- die konische Ringdichtlippe mit ihrem kleineren Durchmesser der Öffnung der Ladeluft - Kupplungsmuffe zugewandt ist, die das Anschlussrohr aufweist.

Diese Anordnung hat den Vorteil, dass die Funktionen "dynamisches Dichten" und "statisches Dichten" der Dichtung voneinander getrennt sind. Durch die axiale Verpressung des Tragkörpers gegen die Ladeluft - Kupplungsmuffe durch den Sperrring ist die statische Dichtheit erreicht. Die Ringdichtlippe liegt bei der Montage nur mit geringer Kraft am Anschlussstutzen an. Durch den Luftdruck innerhalb der Ladeluft - Kupplungsmuffe wird der Anpressdruck der Ringdichtlippe an den Anschlussstutzen proportional zum Luftdruck verstärkt und dadurch die dynamische Dichtheit erreicht.

In einer Weiterbildung der Erfindung weist der Tragkörper der Dichtung einen Lageindikator in Form eines ringförmigen Wulstes an dem der Dichtlippe entgegengesetzten Ende der Dichtung auf.

Mit diesem Lageindikator ist erreichbar, dass die Dichtung nicht in falscher Lage in die Ladeluft - Kupplungsmuffe einbaubar ist, da für den Lageindikator ein korrespondierender Montageraum vorhanden sein muss. Bei falscher Lage der Dichtung korrespondiert der Lageindikator der Dichtung nicht mit diesem Raum und die Dichtung ist nicht montierbar.

In einer weiteren Ausbildung der Erfindung ist die Ladeluft - Kupplungsmuffe aus zwei Teilen aufgebaut, nämlich
- einem Schlauchanschlussteil mit zwei Abschnitten,
   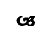 dessen erster Abschnitt durch ein gegen die Muffenachse axial abgewinkeltes oder gerades Anschlussrohr gebildet ist und
   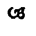 dessen zweiter Abschnitt durch einen ringförmigen Ansatz mit einem radial nach außen gerichteten Bund und einer Dichtungsaufnahme in Form eines Absatzes im Innendurchmesser des Ansatzes gebildet ist und
- einem Muffenstück mit einer Verdrehsicherung, wobei der zweite Abschnitt des Schlauchanschlussteils und das Muffenstück unter Festlegung einer beliebig wählbaren radialen Winkelstellung von Abwinkelungsrichtung des Anschlussrohres zur Verdrehsicherung mindestens formschlüssig fest miteinander verbunden sind.

Dadurch, dass die Ladeluft - Kupplungsmuffe zweiteilig aufgebaut ist, ergibt sich der Vorteil, dass Muffenstück und Schlauchanschlussteil zueinander gedreht hergestellt werden können, so dass durch die Lage vom Grundkörper zum Muffenkopf beliebige radiale Winkelstellungen zwischen Verdrehsicherung im Muffenstück und Abwinkelung des Anschlussrohres ausführbar sind.

In einer Weiterbildung der Erfindung ist der die Dichtung haltende Sperrring fest zwischen Schlauchanschlussteil und Muffenstück eingeschlossen.

Diese Anordnung hat den Vorteil, dass Dichtung und Sperrring bereits nach Abschluss der Spritzvorgänge in ihrer vorgesehenen Position befindlich und gegen Herausfallen gesichert sind. Dadurch können zwei nachgeschaltete Arbeitsgänge entfallen. Der Sperrring muss nicht eingepresst werden, was vorteilhafterweise weniger genaue Toleranzen von Ladeluft - Kupplungsmuffe und Sperrring erfordert.

Anhand der Zeichnung wird nachstehend die Erfindung näher erläutert. Es zeigt
- Fig. 1: eine erfindungsgemäße zweiteilige Ladeluft - Kupplungsmuffe mit abgewinkeltem Anschlussrohr im Querschnitt,
- Fig. 2: eine Querschnittsdarstellung einer Ladeluft - Kupplungsmuffe mit geradem Anschlussrohr, aufgesteckt auf einen Anschlussstutzen und
- Fig. 3: eine Ladeluft - Kupplungsmuffe nach dem Stand der Technik.

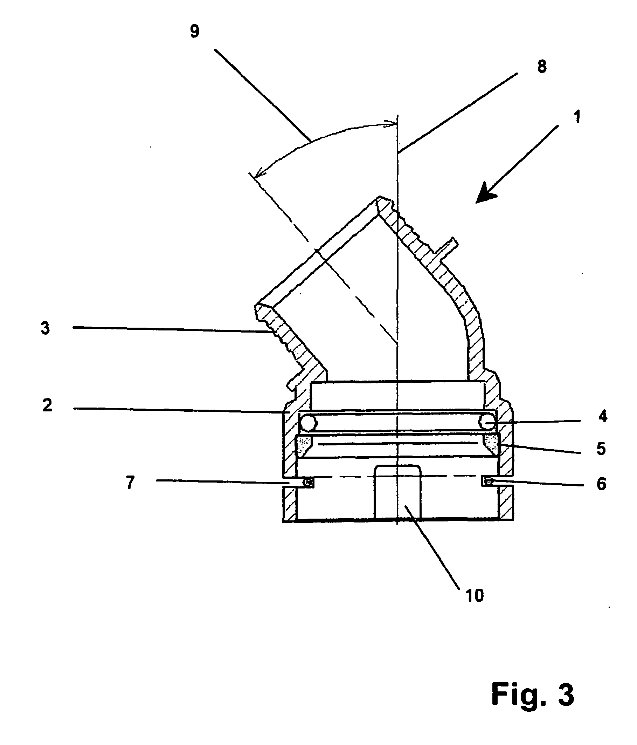

In Fig. 3 ist eine Ladeluft - Kupplungsmuffe 1 nach dem derzeit bekannten Stand der Technik im Querschnitt dargestellt. Die Ladeluft - Kupplungsmuffe 1 weist ein Gehäuse 2 mit einem Anschlussrohr 3 für einen hier nicht gezeigten Schlauch auf. Im Gehäuse 2 sind in der dem zur Befestigung des Schlauchs vorgesehenen entgegengesetzten Öffnung eine Dichtung 4 und ein Sperrring 5 angeordnet. Eine Haltefeder 6 ist in Ausnehmungen 7 des Gehäuses 2 angeordnet. Das Anschlussrohr 3 bildet mit der Muffenachse 8 einen axialen Winkel 9. In eine als radial nach außen weisende Ausbuchtung 10 des Gehäuses 2 greift ein hier nicht gezeigtes Verdrehsicherungselement des ebenfalls nicht gezeigten aggregateseitigen Anschlussstutzens ein. Die Ausbuchtung 10 wird im Folgenden als Verdrehsicherung 10 bezeichnet.

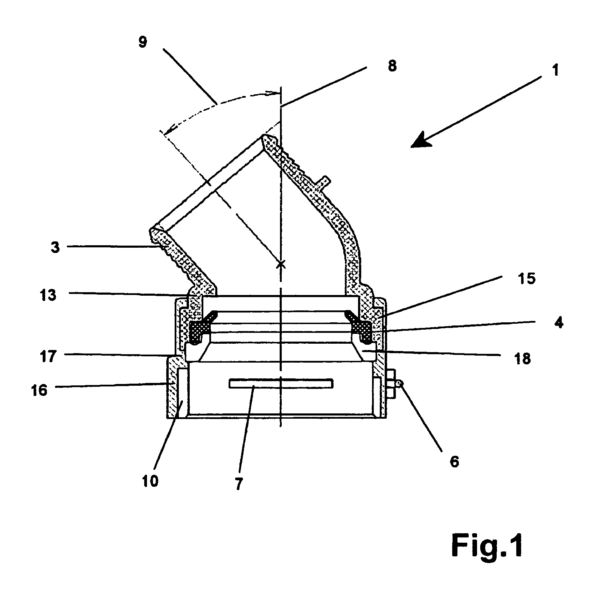

Die in Fig. 1 gezeigte erfindungsgemäße Ladeluft - Kupplungsmuffe 1 weist ein Schlauchanschlussteil 13 mit Anschlussrohr 3 auf, wobei das Anschlussrohr 3 mit einem Winkel 9 axial gegen die Hauptachse 8 der Ladeluft - Kupplungsmuffe 1 abgewinkelt ist. An dem zylindrischen, dem Anschlussrohr 3 gegenüberliegenden Endabschnitt des Schlauchanschlussteils 13 ist am Außenumfang des Endabschnittes ein radial nach außen vorstehender Bund 15 angeordnet.

Die Ladeluft - Kupplungsmuffe 1 weist weiterhin ein Muffenstück 16 auf, das den Bund 15 des Schlauchanschlussteils 13 umgreift, wobei das Schlauchanschlussteil 13 beim Anspritzen des Muffenstückes 16 etwas anschmilzt, so dass Schlauchanschlussteil 13 und Muffenstück 16 sowohl formschlüssig als auch kraftschlüssig miteinander verbunden sind. In der in dem zylindrischen, dem Anschlussrohr 3 gegenüberliegenden Endabschnitt des Schlauchanschlussteils 13 angeordneten zylindrischen Öffnung des Muffenstückes 16 ist eine radial nach außen gerichtete Verdrehsicherung 10 angeordnet, in die ein entsprechendes, hier nicht gezeigtes Verdrehsicherungselement eines ebenfalls hier nicht gezeigten Anschlussstutzens eingreift. Die Haltefeder 6 umgreift das Muffenstück 16, wobei die Schenkel der Haltefeder 6 in Ausnehmungen 7 geführt werden, von denen hier nur eine gezeigt ist. Dabei ist die Haltefeder 6 so angeordnet, dass die Schenkel im Bereich der Ausnehmungen 7 in die Öffnung des Muffenstückes hineinragen. Beim Aufstecken der Ladeluft - Kupplungsmuffe 1 auf den nicht gezeigten Anschlussstutzen werden die Schenkel der Haltefeder 6 durch eine Anschrägung des Anschlussstutzens auseinandergedrückt und schnappen im vollständig aufgesteckten Zustand in entsprechende Nuten des Anschlussstutzens ein. Damit wird ein sicherer Sitz der Ladeluft - Kupplungsmuffe auf dem Anschlussstutzen erreicht.

Zwischen dem dem Anschlussrohr 3 gegenüberliegenden Ende des Schlauchanschlussteils 13 und einem dem Schlauchanschlussteil 13 zugewandten Absatz 17 im Innendurchmesser des Muffenstückes 16 ist ein Sperrring 18 angeordnet, der die Dichtung 4 in Position hält, wobei der Sperrring 18 und die Dichtung 4 zwischen Schlauchanschlussteil 13 und Muffenstück 16 unverlierbar eingebettet sind.

Im dargestellten Beispiel zeigt das abgewinkelte Anschlussrohr 3 in die gleiche Richtung wie die Verdrehsicherung 10. Durch entsprechende Stellung des Muffenstückes 16 zum Schlauchanschlussteil 13 beim Spritzvorgang sind beliebige radiale Winkelstellungen zwischen der Verdrehsicherung 10 und der Abwinkelungsrichtung des Anschlussrohres 3 herstellbar.

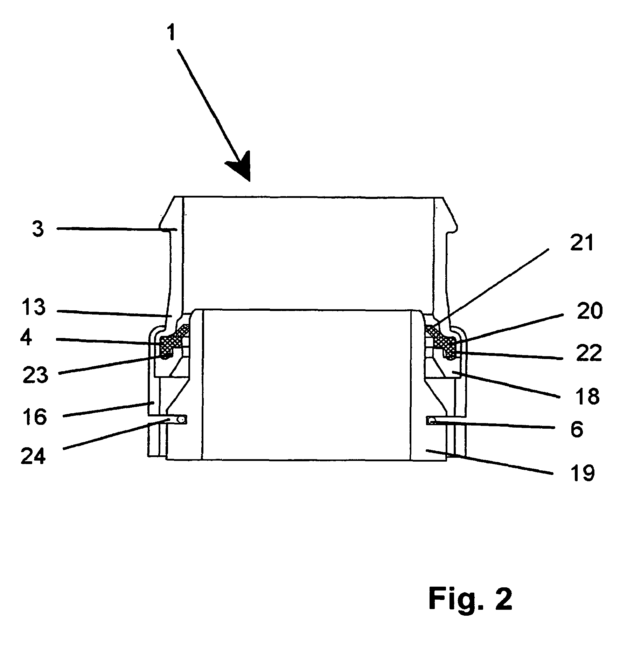

In Fig. 2 ist die als Formdichtring ausgebildete Dichtung 4 in ihrer Einbaulage im Schlauchanschlussteil 13 mit Sperrring 18 und Muffenstück 16 aufgesteckt auf einen Anschlussstutzen 19 gezeigt. Die Dichtung weist einen Tragkörper 20, eine konische Dichtlippe 21 und einen Lageindikator 22 auf. Der Tragkörper 20 ist durch den Sperrring 18 zwischen dem Schlauchanschlussteil 13 und dem Sperrring 18 axial verpresst. Dadurch ist die statische Dichtheit zwischen Dichtung 4 und dem Schlauchanschlussteil 13 erreichbar. Die Dichtlippe 21 weist radial nach innen und liegt im fertig montierten Zustand der Ladeluftkupplung 1 am Anschlussstutzen 19 an. Der als ringförmiger Ansatz ausgebildete Lageindikator 22, der an dem Ende der Dichtung 4 angebracht ist, welches dem die Dichtlippe 21 aufweisenden Ende gegenüberliegt, verhindert, dass die Dichtung 4 in falscher Lage einbaubar ist, da für den Lageindikator 22 eine entsprechende Ausnehmung 23 vorhanden sein muss. Die Ausnehmung 23 ist im vorliegenden Beispiel im Sperrring 18, nicht aber im Schlauchanschlussteil 13 vorhanden, so dass die Dichtung 4 nur in der gezeigten Lage einbaubar ist. Die Ladeluft - Kupplungsmuffe 1 wird durch die in eine Nut 24 des Anschlussstutzens 19 eingerastete Haltefeder 6 fest auf dem Anschlussstutzen 19 gehalten.

### Bezugszeichenliste

- 1: Ladeluft - Kupplungsmuffe
- 2: Gehäuse
- 3: Anschlussrohr
- 4: Dichtung
- 5: Sperrring
- 6: Haltefeder
- 7: Ausnehmungen für die Haltefeder 6
- 8: Muffenachse
- 9: axialer Winkel zwischen Anschlussrohr 3 und Muffenachse 8
- 10: Ausbuchtung/Verdrehsicherung
- 13: Schlauchanschlussteil
- 15: Bund
- 16: Muffenstück
- 17: Absatz
- 18: Sperrring
- 19: Anschlussstutzen
- 20: Tragkörper der Dichtung 4
- 21: Dichtlippe
- 22: Lageindikator der Dichtung 4
- 23: Ausnehmung für den Lageindikator
- 24: Nut im Anschlussstutzen 19

## Patentansprüche

1. Lösbare Ladeluft - Kupplungsmuffe (1) aus Kunststoff zur Verbindung eines medienführenden Schlauches mit einem aggregateseitigen Anschlussstutzen (19), die folgende Merkmale aufweist:
- einen Abschnitt für den Schlauchanschluss mit
■ einem abgewinkelten oder geraden Anschlussrohr (3),
- einen Abschnitt zum Aufstecken auf den Anschlussstutzen (19) mit
■ einer Verdrehsicherung (10) zum Verhindern der Verdrehung zwischen der Kupplungsmuffe (1) und dem Anschlussstutzen (19),
■ einer Dichtung zur Abdichtung der Ladeluft - Kupplungsmuffe (1) gegen den Anschlussstutzen (19),
■ einem die Dichtung (4) fixierenden Sperrring (18) und
■ einer Haltefeder (6) zum Festhalten der Kupplungsmuffe (1) auf dem Anschlussstutzen (19),
**dadurch gekennzeichnet, dass**
die Dichtung (4) der Ladeluft - Kupplungsmuffe (1) als ein asymmetrischer Formdichtring (4) mit einem statisch dichtenden, ringförmigen Tragkörper (20) und einer dynamisch dichtenden konischen Ringdichtlippe (21) ausgebildet ist, wobei
- der ringförmige Tragkörper (20) der Öffnung der Ladeluft - Kupplungsmuffe (1) zugewandt ist, die auf den aggregateseitigen Anschlussstutzen (19) aufsteckbar ist und durch den Sperrring (18) axial gegen die Ladeluft - Kupplungsmuffe verpresst ist und
- die konische Ringdichtlippe (21) mit ihrem kleineren Durchmesser der Öffnung der Ladeluft - Kupplungsmuffe (1) zugewandt ist, die das Anschlussrohr (3) aufweist.

2. Ladeluft - Kupplungsmuffe (1) nach Anspruch 1, **dadurch gekennzeichnet, dass** der Tragkörper (29) der Dichtung (4) einen Lageindikator (22) in Form eines ringförmigen Wulstes an dem der Dichtlippe (21) entgegengesetzten Ende der Dichtung (4) aufweist.

3. Ladeluft - Kupplungsmuffe (1) nach Anspruch 1 und 2, **dadurch gekennzeichnet, dass** die Ladeluft - Kupplungsmuffe (1) aus zwei Teilen aufgebaut ist, nämlich
• einem Schlauchanschlussteil (13) mit zwei Abschnitten,
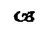 dessen erster Abschnitt durch ein gegen die Muffenachse (8) axial abgewinkeltes oder gerades Anschlussrohr (3) gebildet ist und
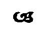 dessen zweiter Abschnitt durch einen ringförmigen Ansatz mit einem radial nach außen gerichteten Bund (15) und einer Dichtungsaufnahme in Form eines Absatzes (17) im Innendurchmesser des Ansatzes gebildet ist und
• einem Muffenstück (16) mit einer Verdrehsicherung (10), wobei der zweite Abschnitt des Schlauchanschlussteils (13) und das Muffenstück (16) unter Festlegung einer beliebig wählbaren radialen Winkelstellung von Abwinkelungsrichtung (9) des Anschlussrohres (3) zur Verdrehsicherung (10) mindestens formschlüssig fest miteinander verbunden sind.

4. Ladeluft - Kupplungsmuffe nach Anspruch 1, 2 oder 3, **dadurch gekennzeichnet, dass** der die Dichtung (4) haltende Sperrring (18) fest zwischen Schlauchanschlussteil (13) und Muffenstück (16) eingeschlossen ist.

## Claims

1. Detachable charge-air coupling sleeve (1) made of plastics material for connecting a media-conducting hose to an equipment-side connecting piece (19), said coupling sleeve (1) having the following features:
- a section for the hose connection, having
■ an angled or straight connecting tube (3),
- a section for plugging onto the connecting piece (19), having
■ an anti-rotation locking means (10) for preventing rotation between the coupling sleeve (1) and the connecting piece (19),
■ a seal for sealing the charge-air coupling sleeve (1) against the connecting piece (19),
■ a locking ring (18) fixing the seal (4), and
■ a retaining spring (6) for holding the coupling sleeve (1) in place on the connecting piece (19),
**characterized in that**
the seal (4) of the charge-air coupling sleeve (1) is in the form of an asymmetrical moulded sealing ring (4) having a statically sealing, annular supporting body (20) and a dynamically sealing conical annular sealing lip (21), wherein
- the annular supporting body (20) faces the opening in the charge-air coupling sleeve (1) that is pluggable onto the equipment-side connecting piece (19) and is pressed axially against the charge-air coupling sleeve by the locking ring (18), and
- the smaller diameter of the conical annular sealing lip (21) faces the opening in the charge-air coupling sleeve (1) that has the connecting tube (3).

2. Charge-air coupling sleeve (1) according to Claim 1, **characterized in that** the supporting body (20) of the seal (4) has a position indicator (22) in the form of an annular bead at that end of the seal (4) that is opposite the sealing lip (21).

3. Charge-air coupling sleeve (1) according to Claims 1 and 2, **characterized in that** the charge-air coupling sleeve (1) is constructed from two parts, namely
• a hose connection part (13) having two sections,
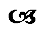 the first section of said hose connection part (13) being formed by a connecting tube (3) which is straight or angled axially with respect to the sleeve axis (8), and
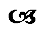 the second section of said hose connection part (13) being formed by an annular protrusion having a radially outwardly directed collar (15) and a seal receptacle in the form of a shoulder (17) in the inside diameter of the protrusion, and
• a sleeve piece (16) having an anti-rotation locking means (10), wherein the second section of the hose connection part (13) and the sleeve piece (16) are connected fixedly together at least in a form-fitting manner with any desired selectable radial angular position of the angling direction (9) of the connecting tube (3) with respect to the anti-rotation locking means (10) being defined.

4. Charge-air coupling sleeve according to Claim 1, 2 or 3, **characterized in that** the locking ring (18) holding the seal (4) is enclosed fixedly between the hose connection part (13) and the sleeve piece (16).

## Revendications

1. Manchon d'accouplement amovible pour air de suralimentation (1) en matière plastique pour le raccordement d'un tuyau transportant un fluide avec un embout de raccordement côté appareil (19), qui présente les caractéristiques suivantes:
- une partie destinée au raccordement du tuyau avec
* un tube de raccordement coudé ou droit (3),
- une partie à engager sur l'embout de raccordement (19) avec
* un blocage de rotation (10) pour empêcher la rotation entre le manchon d'accouplement (1) et l'embout de raccordement (19),
* un joint d'étanchéité pour l'étanchéité entre le manchon d'accouplement pour air de suralimentation (1) et l'embout de raccordement (19),
* une bague de serrage (18) fixant le joint d'étanchéité (4) et
* un ressort de maintien (6) pour maintenir le manchon d'accouplement (1) sur l'embout de raccordement (19),
**caractérisé en ce que** le joint d'étanchéité (4) du manchon d'accouplement pour air de suralimentation (1) est réalisé sous la forme d'un joint torique de forme asymétrique (4) avec un corps de support annulaire (20) statiquement étanche et une lèvre d'étanchéité annulaire conique (21) dynamiquement étanche, dans lequel
- le corps de support annulaire (20) est tourné vers l'ouverture du manchon d'accouplement pour air de suralimentation (1), qui peut être engagée sur l'embout de raccordement côté appareil (19) et qui est pressée axialement contre le manchon d'accouplement pour air de suralimentation par la bague de serrage (18), et
- la lèvre d'étanchéité annulaire conique (21) est tournée par son plus petit diamètre vers l'ouverture du manchon d'accouplement pour air de suralimentation (1), qui présente le tube de raccordement (3).

2. Manchon d'accouplement pour air de suralimentation (1) selon la revendication 1, **caractérisé en ce que** le corps de support (29) du joint d'étanchéité (4) présente un indicateur de position (22) sous la forme d'un bourrelet annulaire sur l'extrémité du joint d'étanchéité (4) opposée à la lèvre d'étanchéité (21).

3. Manchon d'accouplement pour air de suralimentation (1) selon la revendication 1 et 2, **caractérisé en ce que** le manchon d'accouplement pour air de suralimentation (1) est constitué de deux éléments, à savoir
* un élément de raccordement de tuyau (13) avec deux parties
o dont la première partie est formée par un tube de raccordement axialement coudé ou droit (3) par rapport à l'axe du manchon (8), et
o dont la deuxième partie est formée par un épaulement annulaire avec un bord (15) orienté radialement vers l'extérieur et un logement de joint d'étanchéité sous la forme d'un épaulement (17) dans le diamètre intérieur de l'épaulement, et
* un élément de manchon (16) avec un blocage de rotation (10), dans lequel la deuxième partie de l'élément de raccordement de tuyau (13) et l'élément de manchon (16) sont assemblés fermement l'un à l'autre pour bloquer la rotation (10), au moins en complémentarité de forme, en fixant une position angulaire radiale, pouvant être choisie librement, de la direction de coudage (9) du tube de raccordement (3).

4. Manchon d'accouplement pour air de suralimentation selon la revendication 1, 2 ou 3, **caractérisé en ce que** la bague de serrage (18) maintenant le joint d'étanchéité (4) est enfermée fermement entre l'élément de raccordement de tuyau (13) et l'élément de manchon (16).
